(19) Europäisches Patentamt
European Patent Office
Office européen des brevets

(11) Publication number: **0 259 524 B1**

# (12) EUROPEAN PATENT SPECIFICATION

(45) Date of publication of patent specification: **27.03.91**

(51) Int. Cl.5: **C08G 18/50**, C08G 18/66, C08G 18/32, C08G 65/32, C07C 215/08

(21) Application number: **86305972.1**

(22) Date of filing: **01.08.86**

## (54) Polyoxyalkylene polyether amino alcohols containing a tertiary hydroxyl group and flexible polyurethanes made therefrom.

(43) Date of publication of application:
**16.03.88 Bulletin 88/11**

(45) Publication of the grant of the patent:
**27.03.91 Bulletin 91/13**

(84) Designated Contracting States:
**BE DE FR GB**

(56) References cited:
**GB-A- 1 159 962**

(73) Proprietor: **ARCO CHEMICAL TECHNOLOGY INC.**
**3 Christina Centre Suite 902 201 N Walnut Street**
**Wilmington Delaware 19801(US)**

(72) Inventor: **Cuscurida, Michael**
**3543 Greystone Drive Austin**
**Texas 78731(US)**
Inventor: **Klein, Howard Paul**
**8337 Summer Wood Austin**
**Texas 78759(US)**

(74) Representative: **Cropp, John Anthony David et al**
**MATHYS & SQUIRE 10 Fleet Street**
**London, EC4Y 1AY(GB)**

**EP 0 259 524 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates generally to amino alcohols containing a tertiary hydroxyl group, their preparation, and their use in the preparation of flexible polyurethane elastomers and flexible polyurethane foam. The amino alcohols of the present invention, which may also be characterized as alpha, tertiary hydroxypolyoxyalkylene polyether-omega-amines are prepared from an alkylene glycol containing a tertiary hydroxyl group and a secondary hydroxyl group which is alkoxylated with ethylene oxide, propylene oxide or butylene oxide or a mixture thereof to form a polyether intermediate which is then reductively aminated to provide the desired amino alcohol. The thus prepared materials are useful as chain extenders in the preparation of flexible polyurethanes, such as flexible polyurethane elastomers and flexible polyurethane foams, coatings, adhesives and sealants, either directly, or after reaction with an epoxy resin to give modified amino polyol.

Prescott et al. U. S. Patent No. 3,179,606 is directed to cellular polyurethane foam made from a polyoxyalkylene polyether polyol and a polyethylene polyamine.

Edwards et al. U. S. Patent No. 3,297,597 is directed to Mannich condensates of a phenol, formaldehyde and an alkanolamine and to their use in the manufacture of polyurethanes.

Lee et al. U. S. Patent No. 3,236,895 discloses diamines prepared from polyoxypropylene glycol starting materials.

Yeakey U. S. Patent No. 3,654,370 is directed to polyoxyalkylene polyamines prepared from the corresponding polyoxyalkylene polyols.

Moss et al. U. S. Patent No. 3,838,076 is directed to polyurethane foams prepared from partially aminated polyoxyalkylene polyether polyols wherein the amine groups are introduced by reductive amination of the polyoxyalkylene resin in the presence of a hydrogenationdehydrogenation catalyst, hydrogen and ammonia.

Cuscurida et al. U. S. Patent No. 4,296,213 is directed to polyurea polymer polyols made by reacting a hydroxyl-containing amine, a polyether polyol and an organic polyisocyanate. The hydroxy-containing amine is an alkanolamine or a heterocyclic compound such as hydroxyethyl piperazine etc. The use of 2-hydroxyethylethylenediamine is disclosed as a suitable hydroxyl-containing amine.

U. K. Patent Application 2,072,204A is directed to modified polyols prepared by polymerizing an amino alcohol such as an alkanolamine with a polyisocyanate in the presence of a polyether polyol. Amine starting materials that are mentioned include compounds such as the ethanolamines, methyl diethanolamine, the isopropanolamines, etc. It is stated that it is possible to use secondary or tertiary alkanol amines which are halogen substituted at the alkyl group.

The use of a polyol in the preparation of polyurethanes by reaction of the polyol with a polyisocyanate in the presence of a catalyst and other ingredients is well known. Conventional polyols for flexible polyurethane foams are usually made by the reaction of a polyhydric alcohol with an alkylene oxide, usually ethylene oxide and/or propylene oxide, to an average molecular weight of about 2000 to 3000 and above. These polyols are then reacted with polyisocyanate in the presence of water or other blowing agents such as fluorocarbons to obtain polyurethane foams. Polyols have been modified in many ways in attempts to improve the properties of the resulting polyurethane.

U. S. Patent No. 4,394,463 describes a rigid polyurethane foam produced from a modified amino polyol. The modified amino polyol was made by reaction of an initiator having a functionality greater than four with an amine, alkylene oxides and an epoxy resin as described in U. S. Patent No. 4,309,532.

U. S. Patent No. 4,373,034 describes a flexible polyurethane foam made from an epoxy resin modified polyol. The epoxy resin modified polyols were made as described in U. S. Patent No. 4,316,991.

The present invention provides a method for preparing amino alcohols containing a tertiary hydroxyl group and having the formula I

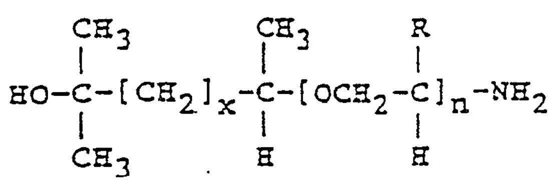

I

wherein, in said formulae, R represents hydrogen or a methyl or an ethyl group, x represents a number having a value of about 1 to about 4 and n represents a number having a value of about 1 to about 40.

Preferably R is methyl, x has a value of 1 and n has a value of 1 to 10; most preferably of 6.

characterised by the steps of

(a) alkoxylating a glycol feedstock having the formula II

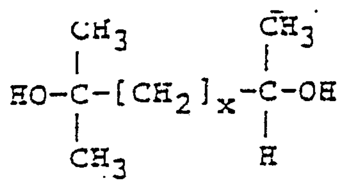

II

with at least one epoxide having the formula III under basic alkoxylation conditions

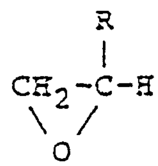

III

to provide an intermediate, having the formula IV and

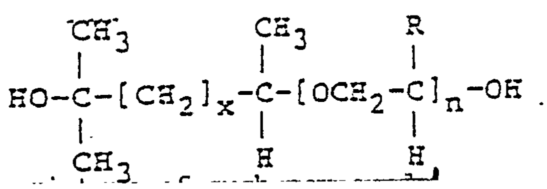

IV

(b) reductively aminating said intermediate compound of formula IV under reductive amination conditions in the presence of a nickel, copper, chromium reductive amination catalyst, ammonia and hydrogen to thereby provide said amino alcohols of formula I containing said tertiary hydroxyl group,

The product of the method of the invention may also be utilized in a method for preparing a modified amino polyol by reacting the same with an epoxy resin to give an amino alcohol adduct, and reacting said adduct with

(i) an initiator having an active hydrogen functionality of 3 to 4, and

(ii) One or more alkylene oxides; said reactions being conducted in such a manner that the adduct is added internally along the length of the polyol chain.

(1 ')

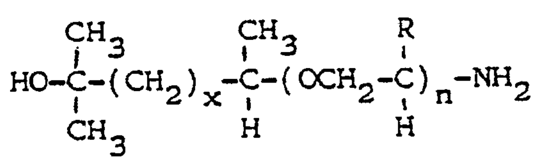

The amino alcohols of the present invention are useful as chain extenders in the manufacture of flexible polyurethanes such as flexible polyurethane elastomers and flexible polyurethane foam.

The Amino Alcohol

The starting materials for the preparation of the amino alcohols of the present invention are a glycol and an epoxide.

The glycol to be used is a glycol that contains one tertiary hydroxyl group. The other hydroxyl group may be primary or secondary, as illustrated by the following formula:

(II)

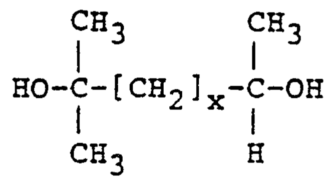

Wherein, x has a value of about 1 to about 4. Representative glycols that may be used include, for example, 2-methyl-2,4-pentane diol (commonly known as hexylene glycol), 2-ethyl-2,4-hexanediol, 2-methyl-2,5-hexanediol, 2-ethyl-4-methyl-3,5-heptanediol, etc.

The epoxide starting material to be used is suitably ethylene oxide, propylene oxide or butylene oxide or a mixture thereof. Such epoxides have the formula:

(III)

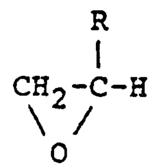

Wherein, R represents hydrogen, a methyl group or an ethyl group.

The glycol feedstock is alkoxylated with the epoxide under basic alkoxylation conditions. Thus, the glycol may be reacted in a suitable reaction vessel, such as a jacketed kettle containing temperature control means and an agitator together with appropriate feed lines and a draw off line. The glycol is reacted with from about 1 to about 40 moles of the alkylene oxide to form a glycol intermediate. The reaction is suitably conducted at a temperature of about 80° to about 150°C under a modestly elevated pressure. Examples of alkaline materials that may be used in the reaction include sodium hydroxide, potassium hydroxide and the corresponding hydrides and alkoxides.

The intermediate characteristically will have the following formula:

(IV)

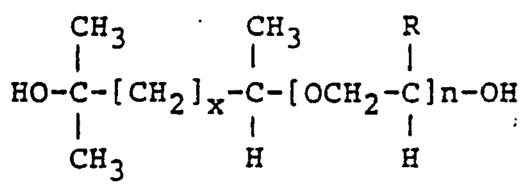

Wherein, R has the meaning given above and wherein x represents a number having an average value of about 1 to about 4, and n has a value of 1 to 40.

The thus prepared intermediate is then reductively aminated in the presence of hydrogen and ammonia using a nickel, copper, chromia catalyst of the type disclosed by Yeakey U. S. Patent No. 3,654,370. Such catalysts are described, for example, in U. S. Patent No. 3,152,998. The catalyst is prepared by the reduction of a mixture of the oxides of nickel, copper and chromium in the presence of hydrogen at a temperature within the range of about 250° to 400°C. Calculated on an oxide-free basis, the catalyst contains about 60-85 mole percent nickel, 14-37 mole percent copper and 1-5 mole percent chromium. A particularly preferred catalyst composition is one containing 70-80 mole percent nickel, 20-25 mole percent copper and 1-5 mole percent chromium.

The process maybe conducted at a temperature within the range of from about 150° to 275°C with a preferred range being from 200° to 250°C. The pressure may be varied from 35-350 kg/cm$^2$ (500-5000 psig) with the preferred range being 140-280 kg/cm$^2$ (2000-4000 psig). The process may be conducted with or without a solvent. Solvents that may be employed include water and inert hydrocarbons such as heptane and cyclohexane. A preferred solvent is liquid ammonia which can be present in a 10-40 mole excess with a 20-30 mole excess being preferred. It is convenient to use ammonia as a solvent since ammonia is necessary to the reaction.

The process may be conducted batchwise, as is done with prior art processes using Raney nickel catalyst, or it may be conducted continuously. Continuous operation is preferred, since, in general, batch processes are slow and require filtration to remove the catalyst.

The resultant reductive amination product will be comprised primarily of an amino alcohol having the following formula:

(I')

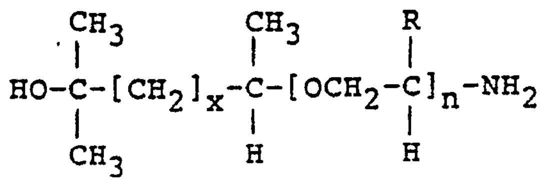

Wherein, x, R and n have the meanings given above.

Manufacture of Flexible Polyurethanes

The components utilized for the manufacture of a flexible polyurethane include the amino alcohol of the present invention, a polyol, an organic polyisocyanate, a catalyst, and other desired additives such as fire retardants, dyes, and fillers.

The polyol component in the present invention comprises a polyoxypropyloxyethylene polyether polyol usually having a hydroxyl number between 20 and 60 and a functionality of 2 to 8.

Normally, propylene oxide will constitute from about 80 to about 100 wt.% of the total polyol composition. Up to about 20 wt.% of ethylene oxide may be utilized if desired, based on the weight of the propylene oxide.

A wide variety of initiators may be alkoxylated to form useful polyoxypropylene polyols. Thus, for example, polyfunctional amines and alcohols of the following types may be alkoxylated: monoethanolamine, diethanolamine, triethanolamine, ethylene glycol, polyethylene glycols, propylene glycols, polypropylene glycols, glycerine, trimethylolpropane, pentaerythritol, sorbitol, sucrose, and mixtures thereof.

Such above amines or alcohols may be reacted with an alkylene oxide component consisting of 100 to about 80 wt.% of propylene oxide and 0 to about 20 wt.% of ethylene oxide using techniques known to those skilled in the art. Thus, for example, the reaction of alkylene oxides with initiators of this type is set forth in U. S. Patent Nos. 2,948,757 and 3,000,963. Essentially such alkoxylations are carried out in the presence of a basic catalyst at a temperature sufficient to sustain the reaction. The hydroxyl number which is desired for the finished polyol will determine the amount of alkylene oxide used to react with the initiator. The polyoxypropylene polyether polyol may be prepared by reacting the initiator with propylene oxide or by reacting the initiator first with propylene oxide followed by ethylene oxide or vice versa in one or more sequences to give a so-called block polymer chain or by reacting the initiator with a mixture of propylene oxide and ethylene oxide to achieve a random distribution of such alkylene oxides. As noted above, the polyoxypropylene polyether polyols useful here usually have a hydroxyl number ranging from about 20 to about 60. The reaction mixture is then neutralized and water and excess reactants are stripped from the polyol.

Typical aromatic polyisocyanates that may be used in the practice of the present invention include m-phenylene diisocyanate, p-phenylene diisocyanate, polymethylene polyphenylisocyanate, 2,4-toluene diisocyanate, 2,6-tolylene diisocyanate, dianisidine diisocyanate, bitolylene diisocyanate, naphthalene-1,4-diisocyanate, diphenylene-4,4'-diisocyanate, aliphatic-aromatic diisocyanates, such as xylylene-1,4-diisocyanate, xylylene-1,2-diisocyanate, xylylene-1,3-diisocyanate, bis(4-isocyanatophenyl) methane, bis(3-methyl-4-isocyanatophenyl) methane, and 4,4'-diphenylpropane diisocyanate.

Methylene-bridged polyphenyl polyisocyanate mixtures which have a functionality of from about 2 to about 4 may also be used. These latter isocyanate compounds are generally produced by the phosgenation of corresponding methylene bridged polyphenyl polyamines, which are conventionally produced by the reaction of formaldehyde with a primary aromatic amine, such as aniline, in the presence of hydrochloric acid and/or other acidic catalysts. Known processes for preparing the methylene-bridged polyphenyl polyamines and corresponding methylene-bridged polyphenyl polyisocyanates therefrom are described in the literature and in many patents, for example, U. S. Patent Nos. 2,683,730; 2,950,263; 3,012,008; 3,344,162; and 3,362,979.

The methylene-bridged polyphenyl polyisocyanate mixtures used here may contain from about 20 to about 100 wt.% of methylene diphenyl diisocyanate isomers with the remainder being polymethylene polyphenyl diisocyanates having higher functionalities and higher molecular weights. Typical of these are

polyphenyl polyisocyanate mixtures ccntaining about 20 to 100 wt.% methylene diphenyl diisocyanate isomers, of which 20 to about 95 wt.% thereof is the 4,4'-isomer with the remainder being polymethylene polyphenyl polyisocyanates of higher molecular weight and functionality that have an average functionality of from about 2.1 to about 3.5. The isocyanate mixtures are known materials.

The catalysts which may be used to make the foams are well known. Tertiary amines and organo-metallic compounds are normally preferred. They are used in effective amounts.

Examples of suitable tertiary amines, used either individually or in admixture, are the N-alkylmorpholines, N-alkylalkanolamines, N,N-dialkylcyclohexylamines and alkylamines where the alkyl groups are methyl, ethyl, propyl, and butyl. Examples of specific tertiary amine catalysts useful in my invention are triethylenediamine, tetramethylethylenediamine, triethylamine, tripropylamine, tributylamine, triamylamine, pyridine, quinoline, dimethylpiperazine, dimethylhexahydroaniline, diethylpiperazine, N-ethylmorpholine, dimethylaniline, nicotine, dimethylaminoethanol, tetramethylpropanediamine, and methyltriethylenediamine.

Organo-metallic compounds useful as catalysts include those of bismuth, lead, tin, titanium, iron, antimony, uranium, cadmium, cobalt, thorium, aluminum, mercury, zinc, nickel, cerium, molybdenum, vanadium, copper, manganese and zirconium. Some examples of these metal catalysts include bismuth nitrate, lead 2-ethylhexoate, lead benzoate, lead oleate, dibutyltin dilaurate, tributyltin, butyltin trichloride, stannic chloride, stannous octoate, stannous oleate, dibutyltin di(2-ethylhexoate), ferric chloride, antimony trichloride, antimony glycolate and tin glycolates.

Selection of the individual catalysts and the effective amounts to use in the polyurethane reaction are well within the knowledge of those skilled in the art, and an amine and organo-metallic compound are often used together in the polyurethane reaction.

Another conventional ingredient that is usually employed is a so-called foam stabilizer. The foam stabilizers are frequently used even when the desired product is a urethane elastomer in order to minimize the formation of large void spaces in the elastomer. Foam stabilizers are also known as silicone oils or emulsifiers. The foam stabilizer may be an organic silane or siloxane. For example, compounds may be used having the formula:

(V) $RSi[O-(R\ SiO)_n-(oxyalkylene)_mR]_3$

wherein R is an alkyl group containing from 1 to 4 carbon atoms; n is an integer of from 4 to 8; m is an integer of 20 to 40; and the oxyalkylene groups are derived from propylene oxide and ethylene oxide. See, for example, U. S. Patent No. 3,194,773.

The flame retardancy of the polyurethane composition can be enhanced by using known fire retardants. Examples of suitable flame retardants are: tris(1,3-di-chloropropyl)phosphate, tris(2,3-dibromopropyl)-phosphate, 2,2-bis(chloromethyl)-1,3 propylene bis[-di(2-chloroethyl)phosphate], tris (2-chloroethyl)-phosphate, tris(2-chloropropyl)phosphate, bis(dichloropropyl)tribromopentyl phosphate, tetrakis-(2-chloroethyl)ethylene diphosphate (sold by Olin Chemicals as THERMOLIN®101), FYROL® EFF (oligomeric chloroalkyl phosphate, sold by Stauffer Chemical Co.), tricresyl phosphate, cresyl diphenyl phosphate, chlorinated paraffins, and brominated paraffins. Although a single flame retardant is preferred from the standpoint of simplicity of formulation, mixtures of two or more of the same type or of different types may be found to give improved performance in some cases, and such mixtures are included in the scope of this invention. The amount of flame retardant can be varied over a wide range of from about 10 to about 50 parts by weight per 100 parts by weight of polyol in the reaction mixture. It is preferred to use from about 10 to about 20 parts by weight.

The polyurethane foams are preferably made in one step by reacting all the ingredients together (the one-shot process). Alternately, the so-called "prepolymer" method may be used wherein only a portion of the polyol is initially reacted with the polyisocyanate to form a so-called prepolymer having an excess of free, or unreacted isocyanate groups. The rest of the polyol and other ingredients may then be added to the prepolymer to complete the reaction.

When it is desired to form a flexible polyurethane foam, an effective amount of a so-called blowing agent should also be employed.

Water is normally the preferred blowing agent for flexible foam. All or part of the water may be replaced with an inert blowing agent such as trichloromonofluoromethane, dichlorodifluoromethane, dichloromonofluoromethane, 1,1-dichloro-1-fluoromethane, 1,1-difluoro-1,2,2-trichloroethane, chloropentafluoroethane, and the like. Other useful blowing agents including low-boiling hydrocarbons such as butane, pentane, hexane, cyclohexane, and the like. See U. S. Patent No. 3,072,582, for example.

In accordance with the present invention from about 0.5 to about 5 wt.% of the polyol component is replaced with the chain extender polyoxyalkylene polyether amino alcohol of the present invention. Since the chain extender contains a primary or secondary amine group, it is self-catalyzing. Moreover, the amine group will react rapidly with the other ingredients in the formulation.

An advantage of this aspect of the present invention is that the terminal tertiary hydroxyl group is significantly less reactive than the amine group and therefore reacts only slowly with the other components of the formulation. As a consequence, the chain extender of the present invention is more uniformly incorporated into the polyurethane resulting in a product having improved tensile strength properties. When the polyurethane product is a flexible polyurethane foam, flexibility will not be imoaired but at the same time a firmer foam will be formed.

## THE MODIFIED AMINO POLYOLS

The modified polyols of this invention may be made by reacting a flexible foam polyol initiator with one or more alkylene oxides to extend the polyol chain to a molecular weight of about 600. The amino alcohol-epoxy resin adduct is then added in such a manner that the epoxy resin is added at selected points internally along the length of the polyol chain. This tends to increase the overall functionality of the polyol chain. It is recommended that at least two equivalents of hydroxyl functionality be present per equivalent of amino alcohol-epoxy resin adduct added to the reaction mixture to avoid gelling by internal cross linking within the epoxy. The amino alcohol-epoxy resin adduct may be added during and/or after the addition of alkylene oxide to the polyol initiator. The best results are obtained if the resin is not added only as a "cap", that is, after all of the oxide has been added which results in the resin being attached to the end of the resulting polyol chain only. One skilled in the art can readily determine the best procedure with respect to when additions should be made and at what temperature and during which times the reaction mixture is to be heated within the scope of this invention.

It is well known that polyethers for polyurethane applications can be prepared by the base catalyzed reaction of propylene oxide with an initiator having a multi-hydrogen functionality, that is, containing from three to four reactive hydrogen atoms. Such initiators include, for example, glycerine, trimethylolpropane, 1,2,6-hexanetriol, pentaerythritol, triethanolamine, ethylenediamine and aminoethylpiperazine. If base catalysis is used, the alkaline catalysts normally employed are sodium hydroxide and potassium hydroxide. Other techniques to prepare polyols are known to those skilled in the art.

Polyether polyols having equivalent weights of up to about 750 are normally prepared in a one-step process by the reaction of propylene oxide with such an initiator. For the preparation of larger molecules, a two-step process is usually employed. In the first step, a product having an equivalent weight of from about 150 to about 750 is prepared, and in the second step this is reacted further with propylene oxide to prepare the higher molecular weight product.

The alkylene oxides useful in this invention are ethylene oxide, propylene oxide and 1,2-butylene oxide. Ethylene oxide and propylene oxide are preferred for this invention and these reactants are used in the examples herein. More than one alkylene oxide may be added to the reaction mixture as deemed necessary by one skilled in the art practicing this invention.

The amino alcohol adducts of the present invention are the reaction product of an epoxy resin and an amino alcohol of the formula:

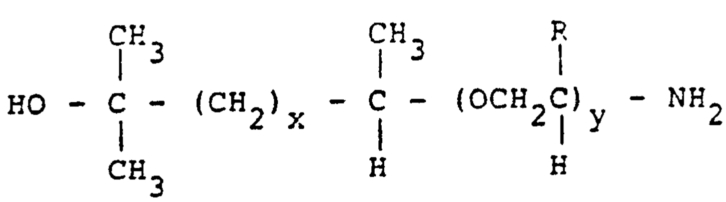

wherein:

x ranges from 1 to 4, preferably 1;

y ranges from 1 to 40, preferably 1 to 10; and

R is an alkyl radical of from 1 to 4 carbon atoms,

preferably a linear alkyl, most preferably methyl.

A glycol, such as hexylene glycol is reacted with from about 1 to about 40 moles of alkylene oxide (e.g. propylene oxide, butylene oxides or mixtures thereof) in basic solution (e.g. sodium hydroxide, potassium hydroxide and the corresponding hydrides and alkoxides) to form a polyoxyalkylene polyether glycol intermediate. The reaction is suitably conducted at a temperature of about 80 °C to about 150 °C under modestly elevated pressure.

The intermediate is then reductively aminated in the presence of hydrogen and ammonia using a nickel, copper, chromia catalyst of the type disclosed by Yeakey in U. S. Patent No. 3,654,370. Such catalysts are described, for example, in U. S. Patent No. 3,152,998.

The reaction is carried out at a temperature of about 200° C to 250° C and a pressure of 2000 psig to 4000 psig optionally in a solvent for example aqueous ammonia in 20 to 30 mole excess.

The tertiary hydroxyl group of the glycol will neither alkoxylate nor aminate and the amino alcohols of the present invention are thereby formed.

The amino alcohol-epoxy resin adduct is formed by reacting the resin with the amino alcohol at a temperature of 100° C to 150° C. Preferably the amino alcohol/epoxy resin mole ratio is 4/1 to 1/1. This adduct is then reacted with the alkoxylated initiator with continuous alkylene oxide addition. The final modified amino polyol has a molecular weight in the range of about 2000 to 7000. Preferably the amino alcohol-epoxy resin adduct comprises 0.5 to 10 wt% of the modified amino polyol.

It is anticipated that a wide variety of epoxy resins would be useful in practicing this invention. The vicinal polyepoxide containing compositions are organic materials having an average of at least 1.8 reactive 1,2-epoxy groups per molecule. These polyepoxide materials can be monomeric or polymeric, saturated or unsaturated, aliphatic, cycloaliphatic, aromatic or heterocyclic and may be substituted if desired with other substituents besides the epoxy groups, e.g., hydroxyl groups, ether radicals and aromatic halogen atoms.

Preferred polyepoxides are those of glycidyl ethers prepared by epoxidizing the corresponding allyl ethers or reacting, by known procedures, a molar excess of epichlorohydrin and an aromatic polyhydroxy compound, i.e., isopropylidene bisphenol, novolak and resorcinol. The epoxy derivatives of methylene or isopropylidene bisphenols are especially preferred. The diglycidyl ether of bisphenol A is used in the examples herein. Some of these epoxy resins are known in the trade as "Epon" resins and may be obtained from Shell Chemical Co.

A widely used class of polyepoxides which are useful according to the instant invention includes the resinous epoxy polyethers obtained by reacting an epihalohydrin, such as epichlorohydrin , with either a polyhydric phenol or a polyhydric alcohol. An illustrative, but by no means exhaustive, listing of suitable dihydric phenols includes
4,4'-isopropylidene bisphenol,
2,4'-dihydroxydiphenylethylmethane,
3,3'-dihydroxydiphenyldiethylmethane,
3,4'-dihydroxydiphenylmethylpropylmethane,
2,3'-dihydroxydiphenylethylphenylmethane,
4,4'-dihydroxydiphenylpropylphenylmethane,
4,4'-dihydroxydiphenylbutylphenylmethane,
2,2'-dihydroxydiphenylditolylmethane,
4,4'-dihydroxydiphenyltolylmethylmethane. Other polyhydric phenols which may also be coreacted with an epihalohydrin to provide these epoxy polyethers are such compounds are resorcinol, hydroquinone, substituted hydroquinones, e.g., methylhydroquinone.

Among the polyhydric alcohols which can be coreacted with an epihalohydrin to provide these resinous epoxy polyethers are such compounds as ethylene glycol, propylene glycols, butylene glycols, pentane diols, bis(4-hydroxycyclohexyl)dimethylmethane, 1,4-dimethylolbenzene, glycerol, 1,2,6-hexanetriol, trimethylolpropane, mannitol, sorbitol, erythritol, pentaerythritol, their dimers, trimers and higher polymers, e.g. polyethylene glycols, polypropylene glycols, triglycerol and dipentaerythritol; polyallyl alcohol, polyhydric thioethers, such as 2,2',3,3'-tetrahydroxydipropylsulfide ; mercapto alcohols such as monothioglycerol and dithioglycerol; polyhydric alcohol partial esters, such as monostearin and pentaerythritol monoacetate; and halogenated polyhydric alcohols such as the monochlorohydrins of glycerol, sorbitol and pentaerythritol.

Another class of polymeric polyepoxides which can be amine cured and are in accordance with the instant invention includes the epoxy novolak resins obtained by reacting, preferably in the presence of a basic catalyst, e.g., sodium or potassium hydroxide, an epihalohydrin, such as epichlorohydrin, with the resinous condensate of an aldehyde, e.g., formaldehyde, and either a monohydric phenol, e.g., phenol itself, or a polyhydric phenol. Further details concerning the nature and preparation of these epoxy novolak resins can be obtained in Lee, H. and Neville, K, Handbook of Epoxy Resins , McGraw Hill Book Co., New York, 1967.

It will be appreciated by those skilled in the art that the polyepoxide compositions which are useful according to the practice of the present invention are not limited to those containing the above described polyepoxides, but that these polyepoxides are to be considered merely as being representative of the class of polyepoxides as a whole.

The reaction conditions of temperature and pressure may be selected by the invention practitioner to meet certain specifications required by the polyol for a particular use. The examples herein use a pressure of about 50 psig and a temperature of about 50 °C to 150 °C as representative conditions for the making of modified polyols that would be useful in flexible foams. The amount of epoxy resin to be added to the reaction mixture should be such that the epoxy equivalents present are less than half of the hydroxyl functionality equivalents present in the reaction mixture. Too many epoxy equivalents in relation to the hydroxyl equivalents may cause the epoxy resin to gel by cross-linking with itself. As a result a large excess of hydroxyl equivalents may be used in the reaction mixture and still be within the spirit and scope of this invention. The modified polyol resulting from the method of this invention would preferably have a molecular weight in the range of 2000 to 7000. It is conceivable that higher molecular weight modified polyols could be prepared by the methods of this invention.

The invention will now be illustrated in the following non limiting Examples:-

Example 1

This example will illustrate the preparation of the hexylene glycol-based diol. This diol served as the starting material for the amino alcohols of this invention.

Hexylene glycol* 1.8 kg (4 lb) and 72g 45% aqueous potassium hydroxide were charged into a five-gallon kettle. Maintaining a nitrogen purge the mixture was heated to 100 °C and stripped to a water content of 0.032 wt.%. Propylene oxide 4.36 kg (9.6 lb) was then reacted at 105-115 °C at 3.5 kg/cm$^2$ (50 psig). Approximately 2.5 hours was required for addition of the propylene oxide. The reaction mixture was then digested 2.5 hours to an equilibrium pressure. The alkaline product was then neutralized by stirring two hours at 95 °C with 300g magnesium silicate which was added as an aqueous slurry. Di-t-butyl p-cresol (13.2g) and Hyflo Supercel (50g) were also added at this time. The neutralized product was vacuum stripped to a minimum pressure, nitrogen stripped, and filtered. The finished product had the following properties:

TABLE I

Sample No. 5748-32

| Properties | |
|---|---|
| Acid no., mg KOH/g | 0.003 |
| Hydroxyl no., mg KOH/g | 163 |
| Water, wt.% | 0.02 |
| pH in 10:6 isopropanol-water | 7.8 |
| Color, Pt-Co | 25 |
| Sodium, ppm | 0.5 |
| Potassium, ppm | 1.4 |

*2-methyl-2,4-pentanediol; Ashland Chemical Co.

The NMR spectra of the product indicated that the propylene oxide addition had taken place at the secondary hydroxyl with less than 10% addition taking place at the tertiary carbon.

Example 2

This example will illustrate the reductive amination of the hexylene glycol-initiated diol of this invention. The diol of Example 1 was reductively aminated at 210 °C in a one-liter continuous reactor over a copper, chromium, nickel catalyst (Ni 2717). Reaction conditions were as follows:

TABLE II

| | |
|---|---|
| Polyol space velocity, g/ml/hr | 0.28 |
| Polyol feed rate, kg/hr | 0.34 |
| Ammonia feed rate, kg/hr | 0.27 |
| Hydrogen feed rate, l/hr | 50 |

The amino alcohol had the following properties:

TABLE III

Sample No. 5663-83

| Properties | |
|---|---|
| Total acetylatables, meq/g | 2.96 |
| Total amine, meq/g | 2.77 |
| Primary amine, meq/g | 2.72 |
| Water, wt.% | 0.04 |
| Color, Pt-Co | 25-30 |
| pH | 12.2 |
| Peroxide, ppm | 0.25 |
| Viscosity, °F, | |
| 77 | 46 mPas |
| 100 | 14 " |

The data show the tertiary hydroxyl group to be unreactive in the total acetylatable test. The NMR spectra showed that no amination had occurred on the tertiary alcohol group.

Example 3

This example will illustrate the attempted reductive amination of hexylene glycol. It further shows the necessity of alkoxylating these type materials before they can be reductively aminated.

The hexylene glycol was reductively aminated at 200-230 °C in a 1200 ml continuous reactor over a nickel, copper, chromium catalyst (Ni 2717). Reaction conditions were as follows:

TABLE IV

| | |
|---|---|
| Polyol space velocity, g/ml/hr | 1.36 |
| Polyol feed rate, kg/hr | 0.68 |
| Ammonia feed rate, kg/hr | 1 |
| Hydrogen feed rate, l/hr | 25 |

An analysis of the product showed that little, if any of the desired reaction had taken place.

Example 4

This example will show the use of the aminopolyols of this invention in the preparation of flexible urethane foam. It will further show that higher levels of the products of this invention can be incorporated into the formulation as compared to a 400 molecular weight polyoxypropylenediamine. (JEFFAMINE D-400;

Texaco Chemical Co.) This reflects the reduced reactivity of the amino alcohols of this invention. It further shows that the tertiary hydroxyl of the amino alcohols does react with the isocyanate group.

Formulations, details of reaction, and results are shown in the following table:

TABLE V

| Foam No. | 5895-48B | 5895-48C | 5895-48D | 5895-48E |
|---|---|---|---|---|
| Formulation, pbw | | | | |
| THANOL F-3016[a] | 100 | 100 | 100 | 100 |
| Amino alcohol of Example 1 | 2 | - | 5 | - |
| Polyoxypropylenediamine[b] (400 m.w.) | - | 2 | - | 5 |
| Water | 4.0 | 4.0 | 4.0 | 4.0 |
| L-711 Silicone[c] | 1.0 | 1.0 | 1.0 | 1.0 |
| THANCAT TD-33[d] | 0.3 | 0.3 | 0.3 | 0.3 |
| 50% stannous octoate in dioctyl phthalate[e] | 0.5 | 0.5 | 0.5 | 0.5 |
| Toluene diisocyanate | 50.2 | 50.6 | 50.9 | 52.0 |
| Isocyanate index | 1.05 | 1.05 | 1.05 | 1.05 |
| Details | | | | |
| Cream time, sec. | 11 | 10 | 9 | 9 |
| Rise time, sec. | 82 | 82 | 80 | 75 |
| Density, pcf | 1.46 | 1.43 | 1.41 | - |
| Appearance | Good open foam | Good slightly tight | Good slightly tight | Shrunk badly, discarded |

[a]3000 m.w. propylene oxide/ethylene oxide adduct of glycerin; Texaco Chemical Co.
[b]JEFFAMINE D-400; Texaco Chemical Co.
[c]A product of Union Carbide Chemical Co.
[d]33% triethylenediamine in propylene glycol; Texaco Chemical Co.
[e]Catalyst T-10; M&T Chemicals

It will be noted from Table V that examples 5895-48B and 5895-48D demonstrate the improved results obtainable with the present invention. Thus, when the use of the amino alcohol of Example 1 is compared with a 400 molecular weight polyoxypropylene diamine, it is observed that at an equivalent weight level, a better quality foam is obtained with the product of the present invention. This demonstrates that higher than normal amounts of the chain extender of the present invention may be used with good results in the manufacture of polyurethane foam in accordance with the present invention.

EXAMPLE 5

EPON ® 828 (575 g, 1.5 mole) was charged into a one-liter resin flask equipped with a stirrer, nitrogen inlet, and thermometer and heated to 125° C. The amino alcohol (275 g, 0.75 mole) was then added slowly, keeping the temperature at 125-130° C. The hexylene glycol based amino alcohol (lot 5663-83-3) had the following properties: Total acetylatables, meq/g 2.96, total amine, meq/g 2.77, primary amine, meq/g 2.72. The reaction mixture was digested two hours at 125° C after the amino alcohol addition was completed. The finished product was a light yellow viscous liquid which had the following properties:

| Sample no. | 5926-7 |
|---|---|
| Properties | |
| Epoxide content, meq/g | 2.71 |
| Water, wt% | 0.05 |
| Secondary + tertiary amine, meq/g | <0.01 |
| Total amine, meq/g | 0.90 |

EXAMPLE 6

Into a 45 litre (ten gallon) kettle was charged 2.27 kg (5.0 ob) of a 600 m.w. propylene oxide (PO)-/ethylene oxide (EO) adduct of glycerin (alkalinity, mg KOH/g 25.56). The reactor was then thoroughly purged with prepurified nitrogen and heated to 105° C. A mixture of 4.7 kg (10.5 lb) PO and 0.18 kg (0.4 lb) EO was then added at 105-110° C at 3.5 kg/cm$^2$ (50 psig). After digestion to an equilibrium pressure, 0.52 kg (1.15 lb) of the amino alcohol-epoxy resin adduct of Example 1 was slowly added to the reactor. Without digestion, a mixture of 4.77 kg (10.5 lb) of PO and 0.18 kg (0.4 lb) of EO was added at 105-110° C at 3.5 kg/cm$^2$ (50 psig). The polyol was then capped with 0.36 kg (0.8 lb) PO and digested to an equilibrium pressure. The alkaline product was then neutralized at 95° C by stirring with 348 g magnesium silicate which was added as an aqueous slurry. Di-t-butyl p-cresol (52.2 g) and octylated diphenylamine (7.8 g) was also added at this time. The neutralized product was then vacuum stripped to a minimum pressure at 100° C, nitrogen stripped and filtered. The finished product had the following properties:

| Sample no. | 5931-41 |
|---|---|
| Properties | |
| Acid no., mg KOH/g | 0.008 |
| Hydroxyl no., mg KOH/g | 57.1 |
| Water, wt% | 0.05 |
| Unsaturation, meq/g | 0.024 |
| pH in 10:6 isopropanol-water | 7.7 |
| Color, Pt-Co | <50 |
| Potassium, ppm | 0.2 |
| Sodium, ppm | 0.2 |
| Peroxide, ppm | 1.1 |
| Viscosity, °F, | |
| 77° | 907 mPas |
| 100° | 447 -- |

EXAMPLE 7

This example will demonstrate that higher levels of the amino alcohol-epoxy resin (Epon 828) adduct of Example 5 can be incorporated into polyols than the epoxy resin alone. This serves to minimize the chance of gelation in the reaction.

In these experiments, various levels of the amino alcohol-epoxy resin adduct were reacted with an 1815 m.w. PO/EO adduct of glycerin which had an alkalinity of 8.26 mg KOH/g. This corresponds to the midpoint of PO/EO addition (step 1) as described in Example 6 Viscosities of the resultant products are showing the following table:

| Sample No. | 5451-88 | 5451-90 | 5451-91 | 5895-57A | 5895-57B |
|---|---|---|---|---|---|
| Amino alcohol-EPON® 828 adduct of Ex. 1, wt. % | - | - | - | 5.66 | 7.4 |
| Epon 828, wt% | 5.66 | 7.4 | 9.1 | - | - |
| Viscosity, 77°F, mPas | 4177 | 17846 | Gelled | 4521 | 2707 |

EPON® 828 is the diglycidyl ether of bisphenol A, the condensation product of epichlorohydrin and bisphenol A, manufactured by Shell Chemical Co.

EXAMPLE 8

This example will show the use of the aminoalcohol-epoxy resin modified polyol of Example 6 in the preparation of polyurethane flexible foam. It will further show the improved properties of foams made from this polyol as compared to a 3000 m.w. epoxy resin-modified polyol (THANOL® F-3050; Texaco Chemical Co.).

Formulations, details of preparation and properties are shown in the following table:

| Foam No. | 5895-79D | 5895-80B | 5895-79E | 5895-80A |
|---|---|---|---|---|
| Formulation, pbw | | | | |
| Amino alcohol-epoxy resin modified polyol of Example 2 | 100 | 100 | - | - |
| 3000 m.w. epoxy resin-modified polyol[a] | - | - | 100 | 100 |
| Water | 4.0 | 4.0 | 4.0 | 4.0 |
| L-711 silicone[b] | 1.0 | 1.0 | 1.0 | 1.0 |
| 50% stannous octoate[c] | 0.3 | 0.2 | 0.3 | 0.2 |
| Thancat TD-33[d] | 0.3 | 0.3 | 0.3 | 0.3 |
| Toluene diisocyanate | 49.7 | 49.7 | 49.7 | 49.7 |
| Isocyanate index | 1.05 | 1.05 | 1.05 | 1.05 |
| Details of Preparation | | | | |
| Cream time, sec. | 10 | 12 | 10 | 12 |
| Rise time, sec. | 98 | 97 | 104 | 123 |
| Properties | | | | |
| Density, pcf | 1.41 | 1.59 | 1.49 | 1.57 |
| Chatillon gauge, reading, 25%, lb | 4.6 | 4.8 | 4.25 | 4.1 |
| Tensile, psi | (11.3) | (13.0) | (12.2) | (10.6) |
| $g/cm^2$ | 794 | 913 | 857 | 745 |
| Elongation, % | 120 | 100 | 120 | 100 |
| Tear, (pli) | (1.05) | (1.1) | (1.1) | (1.1) |
| $N/mm^2$ | 0.18 | 0.19 | 0.19 | 0.19 |
| Compression set 50% | 8.8 | 5.3 | 7.4 | 8.5 |
| 90% | 9.0 | 6.0 | 9.3 | 8.0 |

[a] THANOL® F-3050, a product of Texaco Chemical Co.
[b] A product of Union Carbide Chemical Co.
[c] T-10 catalyst; M&T Chemicals
[d] 33% triethylenediamine in propylene glycol; a product of Texaco Chemical Co.

It will be understood that where, for example, a mixture of glycols having the formula II and/or a mixture of epoxides having the formula III is used, the product will he a mixture of compounds of the formula I.

## Claims

**1.** A method for preparing amino alcohols of formula I, containing a tertiary hydroxyl group

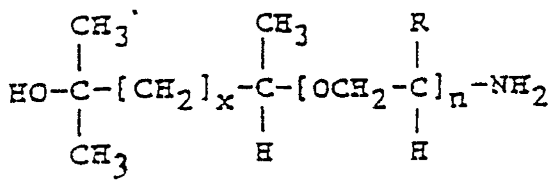

I

wherein, in said formulae, R represents hydrogen or a methyl or an ethyl group, x represents a number having an value of 1 to 4 and n represents a number having an value of 1 to 40,
characterized by the steps of:
(a) alkoxylating a glycol feedstock having the formula II

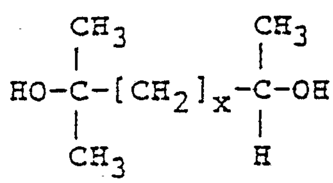

II

with at least one epoxide having the formula III

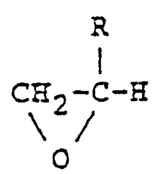

III

to provide intermediate compounds having the formula IV, in which R,x,n are defined as above

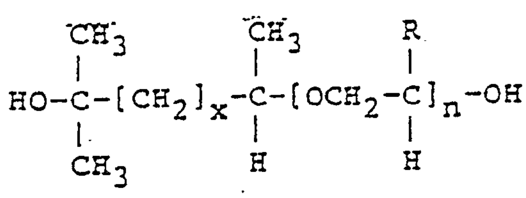

IV

and
(b) reductively aminating said intermediate compounds of Formula IV under reductive amination conditions in the presence of a nickel, copper, chromium reductive amination catalyst, ammonia and hydrogen to thereby provide said amino alcohols of formula I containing said tertiary hydroxyl group

**2.** A method according to claim 1 characterized in that R is methyl, x has a value of 1 and n has a value of 1 to 10.

**3.** A method according to either of claims 1 or 2 wherein n has a value of about 6.

**4.** A method for preparing a modified amino polyol for use in preparing flexible polyurethane foams, characterized by reacting a compound of the formula (IV) wherein x, n and R have the meanings given in claim 1, with an epoxy resin to give an amino alcohol adduct, and reacting said adduct with
(1) an initiator having an active hydrogen functionality of from 3 to 4, and
(2) one or more alkylene oxides; said reactions being conducted in such a manner that the adduct is added internally along the length of the polyol chain.

**5.** A method according to claim 4 characterized in that in the amino alcohol adduct the mole ratio of amino alcohol/epoxy resin ranges from about 4/1 to 1/1 and in that the amino alcohol adduct comprises

about 0.5 wt% to 10 wt% of the modified amino polyol.

6. A method according to either of claims 4 or 5 characterised in that the sum of the molecular weights of the initiator, alkylene oxides and amino alcohol adduct is about 2000 to 7000; and in that the alkylene oxides are ethylene oxide, propylene oxide, or a mixture thereof.

7. A method for preparing a flexible polyurethane wherein a polyoxypropylene polyether polyol is reacted with an excess of an organic polyisocyanate in the presence of effective amounts of a catalyst characterized by replacing from about 0.5 to about 5 wt% of said polyol with a compound of the formula (I) wherein x, n and R have the meanings given in claim 1.

8. A method according to claim 7 wherein effective amounts of a blowing agent and a foam stabilizer are included in the formulation to thereby provide a flexible polyurethane foam.

9. A method according to either of claims 7 or 8 characterized in that the polyoxypropylene polyether polyol is a polyoxypropylene polyether polyol having a hydroxyl number between 20 and 60, a functionality of from 2 to 8, a molecular weight within the range of 2000 to 8000; prepared by reacting an initiator having a functionality of 2 to 8 with an alkylene oxide component comprising from 100 to 80 wt % of propylene oxide and, correspondingly, from 20 to 0 wt % of ethylene oxide.

10. A method for preparing a flexible polyurethane foam characterized by reacting the modified amino polyol prepared by the method of any of claims 4 to 6, with an organic polyisocyanate and one or more suitable foam catalysts in the presence of a blowing agent.

## Revendications

1. Procédé de production d'aminoalcools de formule I contenant un groupe hydroxy tertiare:

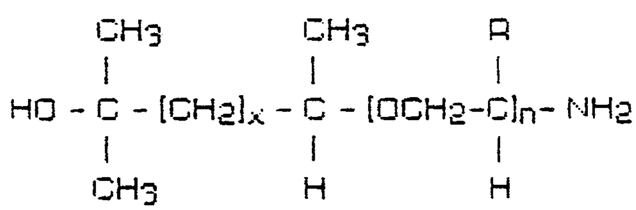

I

dans laquelle R représente un atome d'hydrogène ou un groupe méthyle ou éthyle, x représente un nombre ayant une valeur de 1 à 4 et n représente un nombre ayant une valeur de 1 á 40 caractérisé en ce qu'il comprend les étapes suivantes:

(a) alcoxylation d'une charge de glycol ayant la formule II

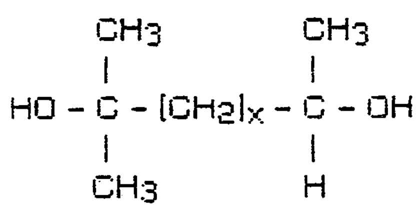

II

avec au moins un époxyde ayant la formule III

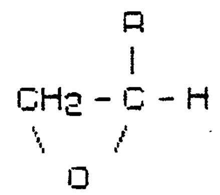

III

pour fournir des composes intermediaires ayant la formule IV

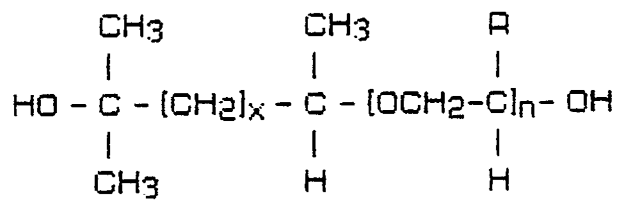

IV

dans laquelle R, x et n sont tels que définis plus haut, et

(b) amination réductrice de ces composés intermédiaries de formule IV dans des conditions d'amination réductrice en presence d'un catalyseur d'amination réductrice au nickel, cuivre, chrome, d'ammoniac et d'hydgrogène pour fournir ainsi ces aminoalcools de formule I contenant ce groupe hudroxy tertiaire.

2. Procédé suivant la revendication 1, caractérisé en ce que R est un groupe méthyle, x a une valeur de 1 et n a une valeur de 1 á 10.

3. Procédé suivant l'une des revendications 1 ou 2, caractérisé en ce que n a une valeur d'environ 6.

4. Procédé pour préparer un aminopolyol modifié utile dans la préparation de mousses de polyuréthanes flexibles, caractérisé en ce qu'il comprend la réaction d'un composé de formule (I) dans laquelle x, n et R sont tels que définis dans la revendication 1, avec une résine époxy pour donner un adduct d'aminoalcool, et la réaction de cet adduct avec

(1) un initiateur ayant une fonctionalité hydrogène actif de 3 à 4 et

(2) un ou plusieurs oxydes d'alkyléne: ces réactions étant conduites de telle sorte que l'adduct est ajouté intérieurement le long de la longueur de la chaîne du polyol.

5. Procédé suivant la revendication 4, caractérisé en ce que dans l'adduct d'aminoalcool, le rapport molaire de l'aminoalcool à la résine époxy est dans une gamme d'environ 4/1 à 1 /1 et que l'adduct d'aminoalcool comprend environ 0,5% en poids à 1 0% en poids de l'aminopolyol modifié.

6. Procédé suivant l'une des revendications 4 ou 5, caractérisé en ce que la somme des poids moléculaires de l'initiateur, des oydes d'alkylène et de l'adduct d'aminoalcool est d'environ 2000 à 7000; et que les oxydes d'alkylène sont l'oxyde d'éthyléne, l'oxyde de propylène ou leur mélange.

7. Procédé pour préparer un polyuréthane flexible dans lequel un polyoxypropylène polyéther polyol est traité avec un excés d'un polyisocyanate organique en présence de quantités efficaces d'un catalyseur, caractérisé en ce qu'on remplace d'environ 0,5à 5% en poids de ce polyol par un composé de formule (I) dans laquelle x, n et R sont tels que définis dans la revendication 1.

8. Procédé suivant la revendication 7, caractérisé en ce que des quantités efficaces d'un agent soufflant et d'un agent stabilisant la mousse sont incluses dans la formulation pour fournir ainsi une mousse de polyuréthane flexible.

9. Procédé suivant l'une des revendications 7ou 8, caractérisé en ce que le polyoxypropylène polyéther polyol est un polyoxypropylène polyéther polyol ayant un nombre d'hydroxy compris entre 20 et 60, une fonctionalité de 2 à 8, un poids moléculaire dans la gamme de 2000 à 8000; préparé par réaction d'un initiateur ayant une fonctionalité de 2 à 8 avec un composant oxyde d'alkylène comprenant de 100

à 80% en poids d'oxyde de propylène et de façon correspondante, de 20 à 0% en poids d'oxyde d'éthylène.

10. Procédé pour preparer une mousse de polyuréthane flexible caractérisé en ce qu'on fait réagir un aminopolyol modifié préparé selon le procédé de l'une quelconque des revendications 4 à 6, avec un polyisocyanate organique et un ou plusieurs catalyseurs de mousse convenables en présence d'un agent soufflant.

## Ansprüche

1. Verfahren zur Herstellung von ,Aminoalkoholen der Formel I, die eine tertiäre Hydroxylgruppe tragen:

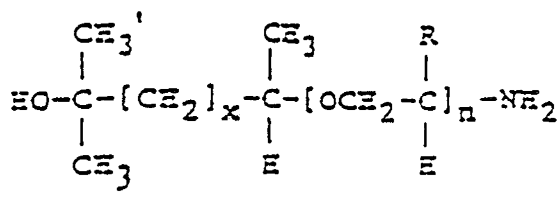

I

in der R Wasserstoff oder eine Methyl- oder eine Ethylgruppe bedeutet, x eine Zahl von 1 bis 4 ist, und n eine Zahl von 1 bis 40 ist, gekennzeichnet durch die folgenden Schritte:
(a) Alkoxylierung eines Glykolausgangsmaterials der Formel (II)

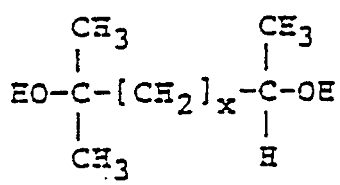

II

mit mindestens einem Epoxid der Formel (III)

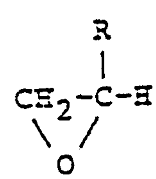

III

um Zwischenverbindungen der Formel (IV) herzustellen,

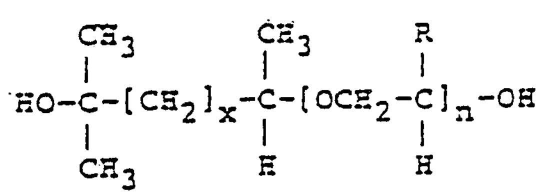

IV

in der R, x, n die vorstehend gegebene Bedeutung aufweisen, und
(b) reduktive Aminierung der Zwischenverbindungen der Formel (IV) unter Bedingungen der reduktiven Aminierung in Gegenwart eines nickel-, kupfer-, chromreduzierenden Aminierungskatalysators, Ammoniak und Wasserstoff, um dadurch die Aminoalkohole der Formel (I), die die tertiäre Hydroxylgruppe enthalten, herzustellen.

2. Verfahren nach Anspruch 1, dadurch gekennzeichnet, daß R Methyl ist, x 1 ist, und n 1 bis 10 ist.

3. Verfahren nach einem der Ansprüche 1 oder 2, bei dem n etwa 6 ist.

4. Verfahren zur Herstellung eines modifizierten Aminopolyols zur Verwendung bei der Herstellung von elastischen Polyurethanschäumen, dadurch gekennzeichnet, daß man eine Verbindung der Formel (1), in der x, n und R die in Anspruch 1 gegebenen Bedeutungen aufweisen mit einem Epoxyharz umsetzt, um ein Aminoalkoholaddukt zu erzeugen, und dieses Addukt mit
(1) einem Initiator mit einer aktiven Wasserstoff-Funktionalität von 3 bis 4, und
(2) einem oder mehreren Alkylenoxid(en) umsetzt, wobei die Reaktionen auf solche Art durchgeführt werden, daß das Addukt innen entlang der Länge der Polyolkette angelagert wird.

5. Verfahren nach Anspruch 4, dadurch gekennzeichnet, daß im Aminoalkoholaddukt das Molverhältnis von Aminoalkohol/Epoxyharz von etwa 4/1 zu 1/1 reicht und dadurch, daß das Aminoalkoholaddukt etwa 0,5 Gew.-% bis 10 Gew.-% des modifizierten Aminopolyols enthält.

6. Verfahren nach einem der Ansprüche 4 oder 5, dadurch gekennzeichnet, daß die Summe der Molekulargewichte des Initiators, der Alkylenoxide und des Aminoalkoholadduktes etwa 2000 bis 7000 beträgt und dadurch, daß die Alkylenoxide Ethylenoxid, Propylenoxid sind oder eine Mischung davon ist.

7. Verfahren zur Herstellung eines elastischen Polyurethans, bei dem man ein Polyoxypropylen-polyetherpolyol mit einem Überschuß eines organischen Polyisocyanates in Gegenwart einer wirksamen Menge eines Katalysators umsetzt, dadurch gekennzeichnet, daß man etwa 0,5 bis etwa 5 Gew.-% des Polyols durch eine Verbindung der Formel (I ) ersetzt, in der x, n und R die in Anspruch 1 gegebenen Bedeutungen aufweisen.

8. Verfahren nach Anspruch 7, bei dem wirksame Mengen eines Blähmittels und eines Schaumstabilisators in der Formulierung enthalten sind, um dadurch einen elastischen Polyurethanschaum herzustellen.

9. Verfahren nach Anspruch 7 oder 8, dadurch gekennzeichnet, daß das Polyoxypropylen-polyetherpolyol ein Polyoxypropylen-polyetherpolyol mit einer Hydroxylzahl zwischen 20 und 60, einer Funktionalität von 2 bis 8, einem Molekulargewicht innerhalb des Bereiches von 2000 bis 8000 ist, hergestellt durch Umsetzen eines Initiators mit einer Funktionalität von 2 bis 8, mit einer Alkylenoxidkomponente, die 100 bis 80 Gew.-% Propylenoxyid und entsprechend 20 bis 0 Gew.-% Ethylenoxid enthält.

10. Verfahren zur Herstellung eines elastischen Polyurethanschaumes, dadurch gekennzeichnet, daß man den modifizierten Aminopolyol, hergestellt nach dem Verfahren nach einem der Ansprüche 4 bis 6, mit einem organischen Polyisocyanat und einem oder mehreren geeigneten Schaumkatalysatoren in Gegenwart eines Blähmittels umsetzt.